# DEMANDE DE BREVET EUROPEEN

(11) **EP 1 564 434 A1**
(43) Date de publication de la demande: **17.08.2005**
(21) Numéro de dépôt: 05002879.4
(22) Date de dépôt: 11.02.2005
(51) Int. Cl.: F16F 9/53

(54) **Dispositif d'amortissement des mouvements d'un ensemble mobile de lave linge**

(30) Priorité: 13.02.2004 FR 0401453; 12.03.2004 FR 0402563
(71) Demandeur: Brandt Industries SAS, 92854 Rueil Malmaison Cedex (FR)
(72) Inventeur: Rabin, Marc Antoine, 69270 Cailloux sur Fontaine (FR)

(57) **Abrégé**

La présente invention se rapporte , à un dispositif d'amortissement des mouvements de l'ensemble mobile d'un lave-linge comprenant au moins un piston articulé sur l'ensemble mobile et se déplaçant à l'intérieur d'une chambre articulée sur une partie immobile du lave-linge.

Selon l'invention, l'effort d'amortissement de ce dispositif est variable en fonction d'au moins un des paramètres du mouvement de l'ensemble mobile.

Ainsi l'effort d'amortissement peut être adapté en fonction de la vitesse du tambour et de l'amplitude mouvement de l'ensemble suspendu.

## Description

La présente invention se rapporte à un dispositif d'amortissement des mouvements de l'ensemble mobile d'un lave-linge comprenant au moins un piston articulé sur l'ensemble mobile et se déplaçant à l'intérieur d'une chambre articulée sur une partie immobile du lave-linge.

Un lave-linge comporte un tambour contenant le linge, immergé dans une cuve et un dispositif d'entraînement du tambour en rotation dans cette cuve. Lorsque le tambour est entraîné en rotation, particulièrement lors de l'essorage, la masse de linge irrégulièrement répartie forme un balourd qui provoque des fortes vibrations de l'ensemble. Afin de diminuer la transmission de ces vibrations au reste de la structure de la machine, l'ensemble cuve - panier - dispositif d'entraînement est monté mobile, suspendu ou posé (ou bien les deux à la fois) sur la structure de la machine. Il est appelé ensemble mobile.

Une mauvaise maîtrise de ces débattements a deux types de conséquences, acoustiques et mécaniques. Les vibrations transmises à la machine font vibrer l'habillage constitué de plaques fines qui sont autant de membranes vibrantes. D'autre part, les forces transmises à la machine provoquent une instabilité mécanique qui dégradent ses composants et peut aller jusqu'au déplacement de la machine.

Pour limiter les débattements de l'ensemble mobile par rapport au reste de la structure de la machine, on peut, par exemple, augmenter l'inertie de la cuve grâce à des dispositifs de lestage intégrés ou fixés sur celle-ci, et/ou lier la cuve à la carrosserie par des amortisseurs fixés d'un côté à la structure immobile de la machine et de l'autre à la cuve. Dans ce dernier cas, plusieurs solutions sont proposées aux fabricants de machine à laver le linge.

La plus courante consiste à utiliser un ou plusieurs amortisseurs tubes. Ceux-ci comportent un piston constitué par un patin de frottement cylindrique coulissant dans un tube lisse dont les parois sont graissées. La force de frottement linéaire est donnée par la pression de serrage entre le frotteur et le tube.

Un tel système présente les contraintes suivantes. L'effort de d'amortissement est constant, il est impossible de le piloter. L'amortissement fourni est le meilleur compromis possible compte tenu de toutes les sollicitations envisageables. Dans ces conditions, l'amortissement n'étant pas adapté en permanence, cela entraîne des phénomènes de fatigue qui limitent la durée de vie du lave-linge.
Une contrainte supplémentaire est un niveau de bruit désagréable pour l'utilisateur.

Le but de l'invention est de permettre, par le pilotage de l'effort d'amortissement, d'améliorer les performances mécaniques de l'appareil grâce au contrôle et à la réduction des débattements de l'ensemble mobile. L'invention améliore les performances acoustiques de l'appareil et limite les contraintes subies par la structure.

Selon l'invention, l'effort d'amortissement de ce dispositif est variable en fonction d'au moins un des paramètres du mouvement de l'ensemble mobile.

Ainsi l'effort d'amortissement peut être adapté, à titre non limitatif, en fonction de la vitesse du tambour et/ou de l'amplitude du mouvement de l'ensemble suspendu.

En outre, une conséquence intéressante de ce dispositif est la possibilité d'optimiser les masses de lestage embarquées. Ces masses sont coûteuses, mais elles posent aussi des problèmes lors du déplacement par l'utilisateur du lave-linge durant sa phase de vie et des problèmes écologiques pour leur retraitement en fin de vie de l'appareil.

Suivant une caractéristique particulièrement intéressante de l'invention, l'effort d'amortissement de ce dispositif peut devenir sensiblement nul, permettant ainsi de désaccoupler l'ensemble mobile et la partie immobile du lave-linge.
Ainsi dans les cas où le mouvement de la cuve n'a pas besoin d'être amorti, par exemple à vitesse constante et avec un balourd très faible. Il est possible de désolidariser l'ensemble mobile de la structure afin d'éviter la propagation des bruits solidiens et de limiter les contraintes subies par la structure.

D'autres caractéristiques et avantages de l'invention ressortiront de la description qui va suivre, donnée à titre d'exemple non limitatif, en référence aux dessins annexés dans lesquels :
- La figure 1 est une vue d'ensemble simplifiée d'un lave-linge ;
- La figure 2 est une vue de face en coupe d'une structure générale d'amortisseur tel que représenté sur la figure 1 ;
- la figure 3 est une vue de face en coupe de l'invention adaptée à un amortisseur à fluide dans lequel on fait varier la section de passage du fluide ;

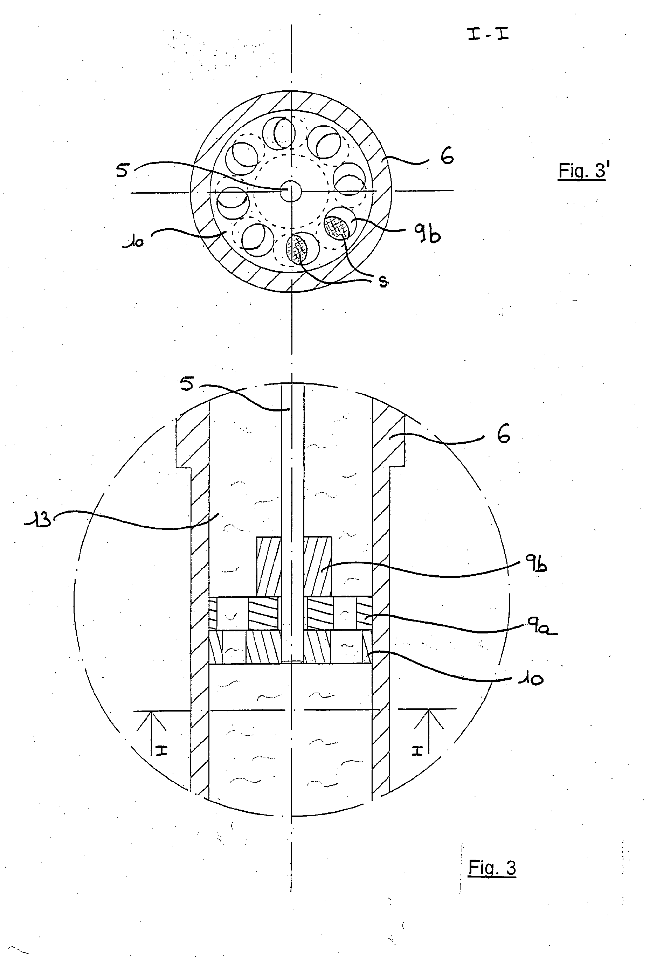

- la figure 3' est une vue en coupe selon l'axe I-I de l'invention selon la figure 3 ;

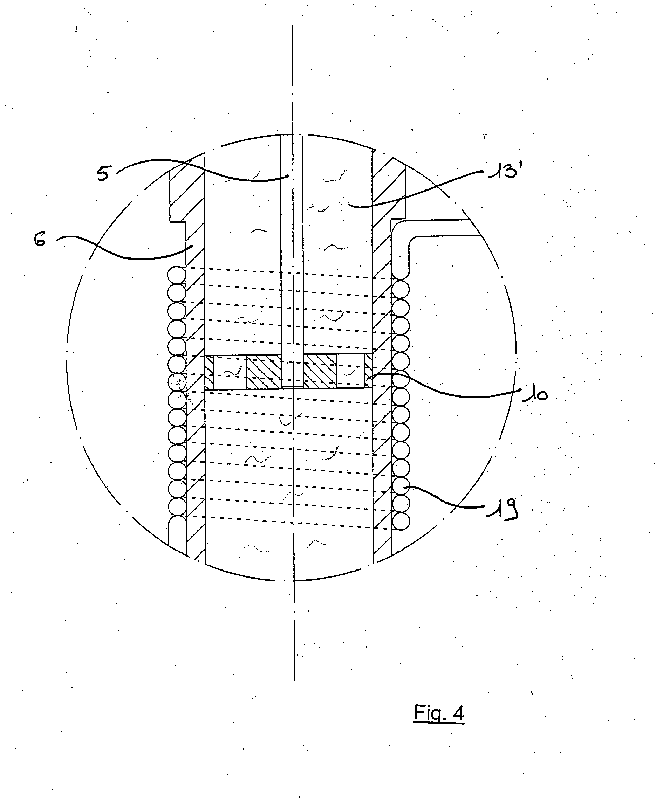

- la figure 4 est une vue de face en coupe de l'invention adaptée à un amortisseur à fluide dans lequel on fait varier la viscosité du fluide ;

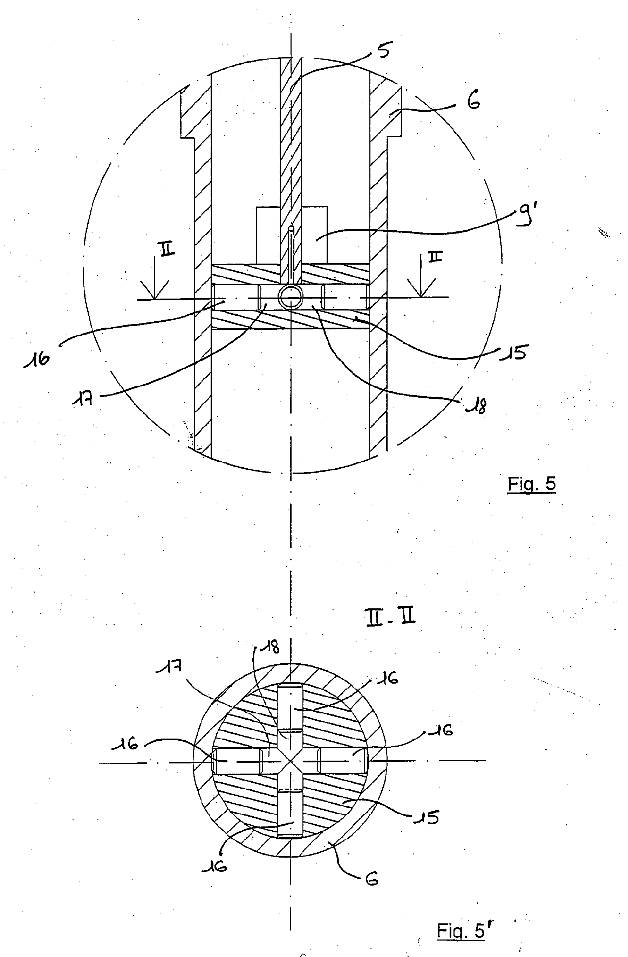

- la figure 5 est une vue en coupe de l'invention adaptée à un amortisseur à friction ;
- la figure 5' est une vue en coupe selon l'axe II-II de l'invention selon la figure 5 ; et

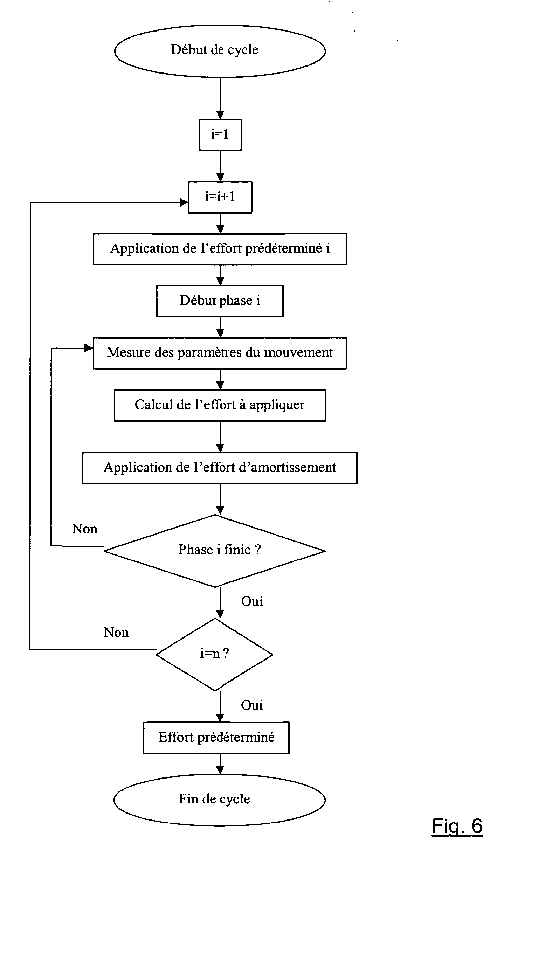

- la figure 6 est un organigramme représentant un asservissement selon l'invention.

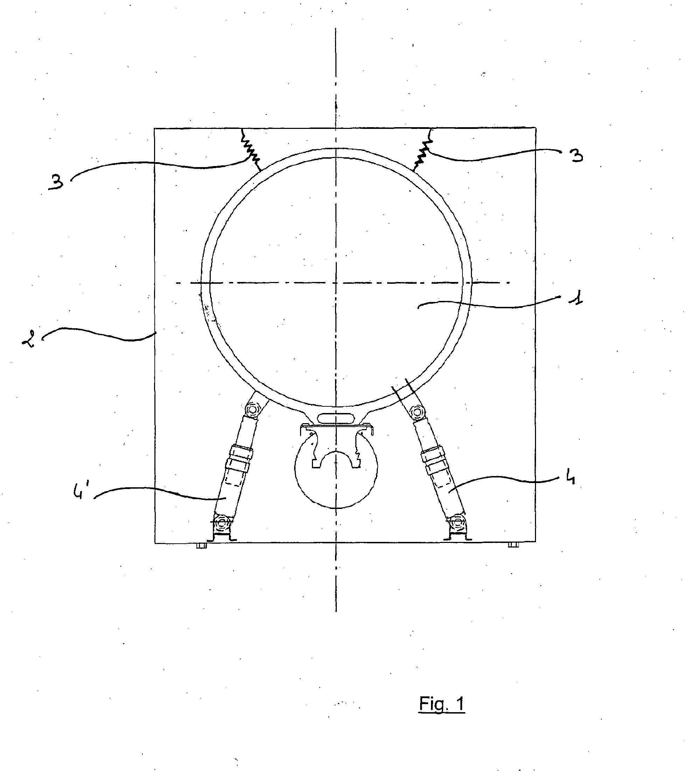

A la figure 1 on a représenté une vue d'ensemble simplifiée d'un lave-linge. L'ensemble mobile 1 est placé à l'intérieur de la structure 2 du lave-linge. Il est relié à celui-ci par des ressorts 3 qui ont été représentés dans la partie supérieure de l'appareil, mais il est tout à fait envisageable de les inclure dans les amortisseurs 4 comme cela est déjà connu sur des lave-linge fabriqués par le demandeur. La figure 1 présente au moins deux amortisseurs 4 et 4' qui peuvent être de caractéristiques identiques ou différentes selon les besoins imposés par le reste de la structure de l'appareil et la présence ou non d'un ou plusieurs autres amortisseurs 4.
Dans la suite de la description nous ne parlerons que d'un amortisseur 4 qui peut être indifféremment l'amortisseur 4, 4' ou un autre comme décrit ci-dessus.

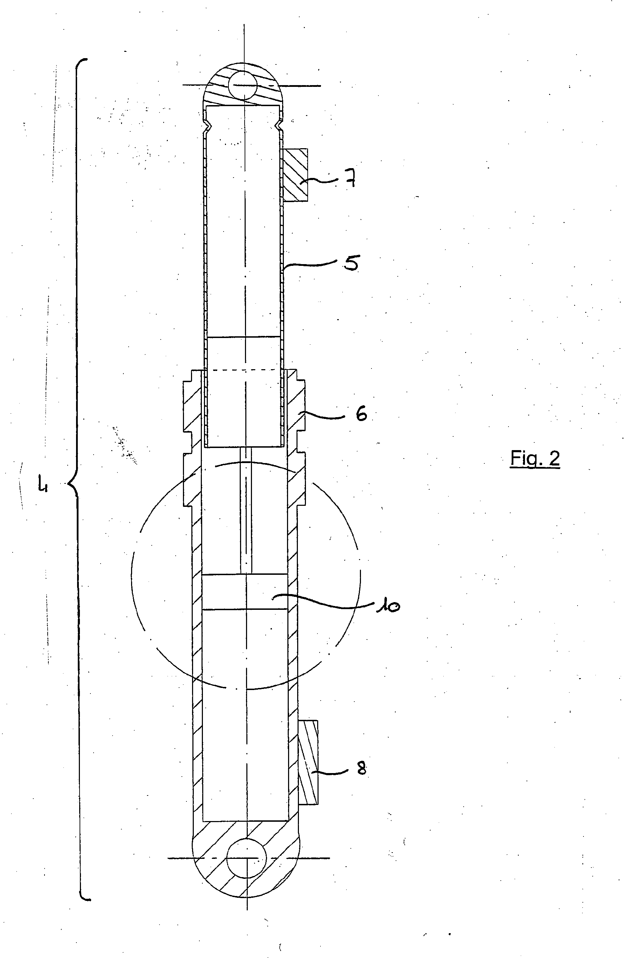

A la figure 2 on a représenté en coupe une structure générale d'amortisseur 4 tel que présenté sur la figure 1.
Selon l'invention, l'amortisseur 4 comporte un piston 5 et une chambre 6. Avantageusement, c'est sur cette structure que se trouvent intégrés l'ensemble des moyens de mesure 7 des paramètres du mouvement, de calcul 8 de l'effort nécessaire et le système d'action sur l'effort d'amortissement 9. Mais il est tout aussi envisageable qu'un seul des amortisseurs soit équipé des moyens de mesure 7 des paramètres du mouvement.
Ainsi les moyens de mesure 7 des paramètres du mouvement peuvent être représentés par un ou plusieurs capteurs disposés sur l'ensemble mobile ou sur un ou plusieurs pistons 5. Dans la suite de cette description, nous représenterons les moyens de mesure 7 des paramètres du mouvement solidaires du piston 5.
De même, les moyens de calcul 8 de l'effort nécessaire peuvent être propres à chaque amortisseur et, soit solidaires de la chambre 6, soit déportés en un autre emplacement, ou bien ils peuvent être centralisés en un seul moyen de calcul localisé sur le lave-linge et par exemple au sein de la carte électronique de commande du lave-linge (non représentée). De même que pour les moyens de mesure 7 des paramètres du mouvement, dans la suite de cette description, nous représenterons les moyens de calcul 8 de l'effort nécessaire solidaires de la chambre 6.
Le système d'action sur l'effort d'amortissement 9 reste, lui, propre à chaque amortisseur.

Aux figures 3, 3' et 4, on a représenté un amortisseur à fluide auquel pourrait être adaptée l'invention. Il comprend un élément de séparation 10 solidaire du piston 5 délimitant deux zones 11 et 12 dans la chambre 6 entre lesquelles se déplace un fluide 13. Ce fluide 13 peut être un liquide visqueux, tel que de l'huile, ou un gaz. L'effort d'amortissement fourni est lié à la plus ou moins grande facilité du fluide 12 à passer de la zone 11 vers la zone 12 et inversement. Il y a au moins deux façons de moduler l'effort d'amortissement dans ces conditions. Soit il faut jouer sur la section S de passage à travers l'élément de séparation 10, soit il faut jouer sur la viscosité du fluide 13.
Dans le cas où l'on fait varier la section S de passage du fluide 13, le moyen 9 de variation de l'effort est commandé afin de faire varier la section de passage du fluide. Ce type de moyen peut être un clapet, un volet ou un diaphragme dont on commande la position par un moteur afin de faire varier la section S. Cela peut être aussi une ou plusieurs électrovannes qui sont actionnées selon le débit voulu.
Aux figures 3 et 3' , on a illustré un moyen de variation de la section S de passage du fluide 13 comprenant deux disques identiques 9a et 10. Ces disques son percés de un ou plusieurs trous 14, représentés ici de forme circulaire, et positionnés l'un sur l'autre. Le disque 10 est solidaire du piston 5 et le disque 9a est solidaire du rotor d'un moteur 9b tandis que le stator de ce même moteur 9b est solidaire du piston 5.
Lorsque les moyens de calcul 8 de l'effort nécessaire lui en transmettent l'ordre, le moteur 9b fait varier les positions angulaires relatives des deux disques afin que le disque 9a obture plus ou moins les trous du disque 10. La somme des sections s ainsi formées forme la section S recherchée.

Dans le cas où l'on fait varier la viscosité du fluide, le moyen 9' de variation de l'effort peut être un générateur de champ qui agit sur un fluide 13' présentant des propriétés électrorhéologiques et/ou magnétorhéologiques. La viscosité de ce type de fluide 13' variant en fonction de la valeur de l'intensité du champ électromagnétique dans lequel il se trouve, il est possible de piloter l'amortissement fourni.
La figure 4 illustre un tel système. Un bobinage 19 est intégré à la chambre 6 et permet de créer, lorsqu'il est mis sous tension, un champ électromagnétique. Ce champ agit sur le fluide 13' selon des phénomènes électrorhéologiques et/ou magnétorhéologiques connus qui modifient sa viscosité. Ainsi le fluide 13' passe plus ou moins facilement au travers de la section S selon l'intensité du champ électromagnétique.

Aux figures 5 et 5', on a représenté un amortisseur à friction auquel pourrait être adaptée l'invention. Il présente un élément de frottement 15 solidaire du piston 5 qui ralentit le mouvement du piston 5 en frottant sur les parois de la chambre 6. Dans ce dispositif, le moyen 9' de faire varier l'effort d'amortissement est un moyen qui modifie la pression exercée par le frotteur 15 sur la paroi.
Un mode de réalisation est illustré par la figure 5. La modification de la pression exercée sur la paroi peut être effectuée grâce à de pistons 16 disposés à l'intérieur du frotteur 15 entre le piston 5 et la chambre 6 dans un plan sensiblement perpendiculaire à l'axe longitudinal de l'amortisseur 4 et modifiant la pression exercée par le frotteur 15 sur les parois de la chambre 6. Le moyen 9 de faire varier l'effort d'amortissement est une pompe qui permet de faire varier la pression d'un fluide à l'intérieur de la conduite 18. La pression ainsi exercée par les pistons 16 sur la paroi de la chambre 6 est modulable en fonction de la valeur de la pression du fluide 17.
Un autre mode de réalisation (non représenté) de la modification de la pression consiste à faire se déplacer sur un noyau conique solidaire du piston 5 des éléments de frottement dont la pression sur la paroi 6 varie en fonction de la position desdits éléments sur le plan incliné. Ce déplacement peut être assuré, à titre d'exemple, par une came motorisée.

Selon une caractéristique préférée de l'invention, le système d'amortissement est tel que l'effort d'amortissement peut devenir sensiblement nul. Dans certaines conditions, il n'est pas nécessaire d'avoir un effort d'amortissement, l'action des ressorts 3 est suffisante. Ces conditions sont, par exemple, un balourd très faible et vitesse constante. Ou encore lors de certaines phases à faible vitesse. En éliminant l'effort d'amortissement, la transmission des bruits et des vibrations est fortement limitée. De même les contraintes sur la structure de l'appareil sont réduites, augmentant sa durée de vie.

A titre d'illustration de l'invention, il pourra être appliqué un effort élevé d'amortissement pour les phases transitoires, un effort moyen lors des phases à faible vitesse et un effort faible lors des phases à grande vitesse. En d'autres termes, pour une structure donnée, lors des phases d'accélération ou de ralentissement de la vitesse du tambour, il peut être envisagé une valeur d'effort de serrage de l'ordre de 120 N, lors des phases de lavage du linge, il peut être envisagé une valeur d'effort de serrage de l'ordre de 50 N et enfin, lors des phases d'essorage du linge, il peut être envisagé une valeur d'effort de serrage de l'ordre de 20 N et pouvant tendre vers 0 N dans les cas de valeurs balourd très faibles et donc très favorable.

Selon une autre caractéristique de l'invention, si les moyens de calcul 8 de l'effort nécessaire sont en liaison avec la carte électronique de commande du lave-linge, il est possible de prévoir dans la programmation de cette carte de commander par anticipation un niveau donné d'amortissement. Ainsi, lors d'un départ en essorage, l'asservissement de l'amortisseur pourra commencer sur une valeur prédéterminée optimisée de l'effort d'amortissement. L'intérêt d'une telle prédétermination est de limiter les à-coups au démarrage. Cette valeur pourra avoir été fixée à la conception de l'appareil. Elle pourra aussi être recalculée par la carte sur la base du comportement de la charge lors des accélérations effectuées au cours d'un cycle de lavage donné.

Un mode de réalisation avantageux de l'invention, les moyens de mesure 7 des paramètres du mouvement comprennent un accéléromètre et les moyens de calcul 8 de l'effort comprennent un microprocesseur. L'accéléromètre transmet en temps réel des informations sur le mouvement de l'ensemble suspendu 2 au microprocesseur. Le microprocesseur calcule les caractéristiques de l'effort d'amortissement nécessaire et commande les moyens de faire varier l'effort en conséquence et en permanence tout au long du cycle de fonctionnement du lave-linge et en particulier au moment de l'essorage. L'organigramme de la figure 6 présente un asservissement se basant sur ce mode de réalisation de l'invention. Le calcul de la valeur de l'amortissement nécessaire pourra être de type PID.

Bien entendu, il pourra être prévu des moyens de transmission des informations issues de l'accéléromètre à la carte électronique de commande du lave-linge afin, par exemple, qu'elle puisse commencer une phase d'essorage une fois que l'accéléromètre lui aura fourni l'information d'une bonne répartition du linge dans le tambour et de ce fait de la présence d'un balourd d'un niveau acceptable.

L'invention répond au souci d'adapter l'effort d'amortissement fourni par les amortisseurs en fonction des paramètres caractérisant le mouvement de l'ensemble suspendu. Les résultats obtenus sont d'ordre économique : la structure du lave-linge est moins sollicitée et donc sa durée de vie est augmentée. D'ordre écologique : le lestage peut être diminué et pose de ce fait moins de problème de recyclage en fin de vie de l'appareil. Et d'ordre ergonomique : l'utilisateur dispose d'un appareil plus léger et moins bruyant.

## Revendications

1. Dispositif d'amortissement des mouvements de l'ensemble mobile 1 d'un lave-linge comprenant au moins un piston 5 articulé sur l'ensemble mobile 1 et se déplaçant à l'intérieur d'une chambre 6 articulée sur une partie immobile 2 du lave-linge,
**caractérisé en ce que** l'effort d'amortissement de ce dispositif est variable en fonction d'au moins un des paramètres du mouvement de l'ensemble mobile 1.

2. Dispositif d'amortissement selon la revendication 1,
**caractérisé en ce que** l'effort d'amortissement de ce dispositif dépend de l'amplitude des mouvements de l'ensemble mobile 1.

3. Dispositif d'amortissement selon la revendication 1,
**caractérisé en ce que** la variation de l'effort d'amortissement de ce dispositif dépend de la fréquence des mouvements de l'ensemble mobile 1.

4. Dispositif d'amortissement selon la revendication 1,
**caractérisé en ce que** l'effort d'amortissement de ce dispositif peut devenir sensiblement nul, permettant ainsi de désaccoupler l'ensemble mobile 1 et la partie immobile 2 du lave-linge.

5. Dispositif d'amortissement selon l'une quelconque des revendications 1 à 4,
**caractérisé en ce que** la chambre 6 dans laquelle évolue le piston 5 étant remplie par un fluide 13, ledit piston 5 délimitant dans la chambre 6 deux zones 11 et 12 de dimensions variant avec les mouvements du piston 5 et entre lesquelles le fluide 13 se déplace en fonction desdits mouvements, la variation d'effort d'amortissement est réalisée grâce à une variation de la section de passage du fluide 13 d'une zone 11 ou 12 vers l'autre.

6. Dispositif d'amortissement selon l'une quelconque des revendications 1 à 4,
**caractérisé en ce que** la chambre 6 dans laquelle évolue le piston 5 étant remplie par un fluide 13, ledit piston 5 délimitant deux zones 11 et 12 de dimensions variant avec les mouvements du piston 5 et entre lesquelles le fluide 13 se déplace en fonction desdits mouvements, la variation d'effort d'amortissement est réalisée grâce à une variation de la viscosité du fluide 13.

7. Dispositif d'amortissement selon la revendication 6,
**caractérisé en ce que** le fluide 13 présente des propriétés électrorhéologiques ou magnétorhéologiques.

8. Dispositif d'amortissement selon l'une quelconque des revendications 1 à 4,
**caractérisé en ce que** le piston 5 étant muni d'un frotteur 15 exerçant une force de frottement sur les parois de la chambre 6, la variation d'effort d'amortissement est réalisée grâce à une variation de l'effort de frottement dudit frotteur 15.

9. Dispositif d'amortissement selon l'une quelconque des revendications précédentes,
**caractérisé en ce que** la variation d'effort d'amortissement est commandée par un système embarqué sur le dispositif d'amortissement, capable de mesurer au moins un des paramètres du mouvement de l'ensemble mobile, de l'analyser et d'agir sur l'effort d'amortissement.

10. Dispositif d'amortissement selon la revendication 9,
**caractérisé en ce que** le moyen de mesure est un accéléromètre.

11. Dispositif d'amortissement selon la revendication 9,
**caractérisé en ce que** le moyen d'action est un moteur faisant varier une section S de passage du fluide 13.

12. Dispositif d'amortissement selon la revendication 9,
**caractérisé en ce que** le moyen d'action est une pompe faisant varier la force de frottement du frotteur 15.
